# FASCICULE DE BREVET EUROPEEN

(11) **EP 0 605 304 B1**
(45) Date de publication et mention de la délivrance du brevet: **04.03.1998**
(21) Numéro de dépôt: 93403166.7
(22) Date de dépôt: 24.12.1993
(51) Int. Cl.: G05B 13/04, G05B 17/02

(54) **Procédé et dispositif de réglage d'un processus**
Verfahren und Vorrichtung zur Steuerung eines Prozesses
Method and apparatus for controlling a process

(30) Priorité: 30.12.1992 FR 9215931
(43) Date de publication de la demande: 06.07.1994
(73) Titulaire: FRAMATOME, 92400 Courbevoie (FR)
(72) Inventeur: Feingold, Jean, F-78160 Marly Le Roi (FR)
(74) Mandataire: Bourely, Paul

(56) Documents cités:
- EP-A- 0 370 327
- FR-A- 2 426 933
- US-A- 4 214 301
- US-A- 4 792 737
- PROCEEDINGS OF THE FALL JOINT COMPUTER CONFERENCE LAS VEGAS, vol.24, November 1963, BALTIMORE,USA pages 425 - 435 P.HALBERT 'Hybrid Simulation of an Aircraft Adaptive control System'
- PATENT ABSTRACTS OF JAPAN vol. 6, no. 183 (P-143) (1061) 18 September 1982 & JP-A-57 098 004 (HITACHI) 18 June 1982

## Description

La présente invention concerne le réglage d'une grandeur apparaissant dans un processus industriel, cette grandeur à régler pouvant être, notamment, de nature physique, chimique ou informatique.

Selon un procédé général connu on applique un signal de consigne à un système de régulation comparant ce signal de consigne à un signal de sortie de processus pour commander un actionneur agissant sur la grandeur à régler, cette dernière étant mesurée par ce signal de sortie de processus. Ce système de régulation peut comporter classiquement des voies à action proportionnelle, dérivée et/ou intégrale. Il peut avoir aussi une action retardatrice.

Même en présence d'un réglage optimal de ces actions ce procédé connu ne permet pas toujours de limiter autant qu'on le souhaiterait les écarts qui apparaissent entre le signal de sortie de processus et le signal de consigne, ceci notamment lorsque les valeurs d'une grandeur variable et dite ci-après "extérieure", autre que la grandeur à régler, sont imposées au processus indépendamment du signal de consigne.

Plus particulièrement, dans le cas où la grandeur à régler est le niveau d'eau alimentaire dans un générateur de vapeur associé à une chaudière nucléaire à eau pressurisée dans une centrale de production d'énergie électrique, on connait des applications particulières de ce procédé général. Plus précisément, le document de brevet FR 2 312 728 décrit un dispositif de réglage du débit d'admission d'eau alimentaire dans un générateur de vapeur. Ce dispositif permet d'obtenir un bon réglage du débit de l'eau alimentaire à basse puissance.

On connait également, par le document de brevet FR 2 426 933, un procédé de réglage du niveau d'eau dans un générateur de vapeur. Ce procédé assure un bon réglage du niveau d'eau pendant la phase transitoire de démarrage de la centrale.

Ces deux documents concernent le cas d'un fonctionnement relativement stable du générateur de vapeur. Ce cas est celui des centrales de production d'énergie électriques qui fonctionnent en régime stable et généralement à une puissance proche de 100% de la puissance nominale. Il est bien différent de celui où un processus industriel tel que le fonctionnement de tels générateurs de vapeur comporte des transitoires de fonctionnement se manifestant par des variations importantes d'une grandeur "extérieure" imposée au processus. Ces variations sont par exemple celles qui affectent le débit de vapeur demandé au générateur en présence de variations de la puissance demandée à la centrale. Dans ce dernier cas les dispositifs de réglage connus réagissent pour s'opposer aux variations induites que ces variations de la grandeur extérieure tendent à imposer à une grandeur à régler telle que le niveau d'eau dans le générateur de vapeur. Mais ils ne permettent pas d'éviter des oscillations importantes de cette grandeur à régler.

La présente invention a notamment pour but de limiter les écarts pouvant apparaître entre la valeur actuelle d'une grandeur à régler apparaissant dans un processus et une valeur de consigne définie pour cette même grandeur par un signal de consigne, ceci notamment en présence de variations importantes et/ou rapides d'une grandeur extérieure imposée par ailleurs à ce processus. De tels écarts peuvent notamment être limités en ce qui concerne leurs valeurs absolues maximales, l'amplitude, le nombre et/ou la fréquence de leurs oscillations, et/ou leurs durées.

Dans ce but cette invention a notamment pour objet un procédé de réglage d'un processus par l'intermédiaire d'un système de régulation, ce procédé étant caractérisé par le fait qu'on utilise des modèles de ce processus et de ce système de régulation pour corriger un signal de consigne d'entrée avant de l'appliquer à ce système de régulation.

Lorsqu'une grandeur extérieure est imposée audit processus en dehors dudit système de régulation lesdits modèles sont sensibles à un signal extérieur représentatif de cette grandeur extérieure.

Plus particulièrement, selon cette invention, et en complément au procédé général connu précédemment mentionné, on établit un modèle d'un ensemble hétérogène constitué par ledit processus avec son système de régulation. Ce modèle est composite et conçu pour fournir un signal de sortie de modèle, homologue dudit signal de sortie de processus, en réponse aux valeurs actuelles et antérieures d'un signal de consigne de régulation de modèle homologue du signal de consigne qui a été mentionné a propos de ce procédé général connu et qui sera appelé ci-après signal de consigne de régulation de processus. Le signal de consigne de régulation de modèle est appliqué en entrée du modèle composite.

Le mot homologue indique ici que la réponse du modèle, représentée par le signal de sortie de modèle, aux valeurs actuelles et antérieures du signal de consigne de régulation de modèle et à celles d'un ou plusieurs signaux extérieurs, doit être similaire à la réponse dudit ensemble hétérogène, représentée par le signal de sortie de processus, aux valeurs actuelles et antérieures du signal de consigne de régulation de processus et des mêmes signaux extérieurs. De telles réponses peuvent, au moins dans le cas de circuits électroniques être convenablement représentées par des fonctions de transfert. De manière générale deux organes sont dits ici homologues lorsqu'ils ont des fonctions de transfert voisines ou identiques et sont insérés d'une même manière dans deux ensembles plus vastes constitués d'organes eux-mêmes homologues. Deux signaux sont dits homologues lorsqu'ils sont reçus ou fournis par deux organes homologues.

Toujours selon cette invention, on compare lesdits signaux de sortie de processus et de modèle pour fournir un signal d'écart de modèle. Ce dernier signal est utilisé pour corriger dans deux sens de correction opposés-un signal de consigne d'entrée dudit dispositif. On forme ainsi les deux dits signaux de consigne de régulation de processus et de consigne de régulation de modèle, respectivement. Les sens de correction sont ceux qui tendent à rapprocher l'un de l'autre les signaux de sortie de processus et de modèle.

Au sein du modèle composite un modèle du processus est choisi pour présenter un comportement constituant une amélioration souhaitée du processus, ce comportement pouvant en outre être avantageusement, simplifié. Par contre les fonctions de transfert des organes du système de régulation du modèle sont de préférence choisies identiques à celles des organes homologues du système de régulation du processus. Le système de régulation du processus et le modèle composite constituent alors un système adaptatif qui fait tendre la réponse au processus vers celle du modèle, ceci notamment dans le but d'améliorer la stabilité et les performances de la régulation.

A l'aide des figures schématiques ci-jointes, on va décrire ci-après comment la présente invention peut être mise en oeuvre, étant entendu que les éléments et dispositions mentionnés et représentés ne le sont qu'à titre d'exemples non limitatifs. Lorsqu'un même élément est représenté sur plusieurs figures il y est désigné par le même signe de référence.

La figure 1 représente une vue d'un générateur de vapeur d'un chaudière nucléaire à eau pressurisée.

La figure 2 représente une vue d'un dispositif selon cette invention utilisé pour régler le niveau d'eau alimentaire dans ce générateur de vapeur.

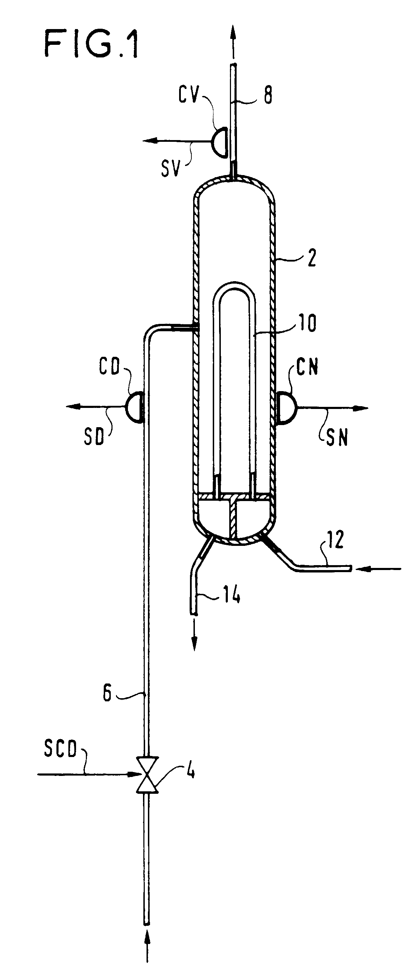

Conformément à la figure 1 un processus industriel est constitué par le fonctionnement d'un générateur de vapeur 2 d'une centrale nucléaire. Ce générateur comporte des tubes d'échange thermique internes 3 parcourus par une eau primaire sous pression chauffée en circuit fermé dans le coeur non représenté d'un réacteur nucléaire. Cette eau primaire arrive de ce coeur par une tubulure 12 et y retourne par une tubulure 14.

Un fluide constitué par une eau alimentaire parvient à ce générateur de vapeur par une canalisation 6 constituant un passage de réglage. Pour cette eau ce générateur constitue un récipient dans lequel elle doit atteindre, sous forme liquide, un niveau convenable éventuellement variable. Au contact des tubes d'échange thermique 10 cette eau se transforme en une vapeur qui sort du générateur par un deuxième passage constitué par une canalisation de vapeur 8. Cette canalisation amène cette vapeur à la turbine non représentée d'un groupe turbo-alternateur d'où elle est extraite vers un condenseur non représenté puis renvoyée vers la canalisation 6 à travers une vanne de réglage 4 qui commande son débit. Cette vanne constitue un actionneur du processus. Elle est commandée par un signal de commande de processus SCD.

Le débit d'eau traversant cette vanne et entrant dans le générateur 2 est représenté par un signal de débit de processus SD fourni par un capteur de débit CD. Un capteur de niveau CN fournit un signal de sortie de processus SN représentatif du niveau d'eau alimentaire dans le générateur 2. Un capteur de deuxième débit CV fournit un signal de deuxième débit SV représentatif du débit de vapeur sortant du générateur 2 par la canalisation 8. La valeur de ce signal SV sera considérée ci-après comme algébriquement négative alors que celle du signal SD sera considérée comme algébriquement positive parce que l'on considérera comme positifs les débits entrant dans ce générateur et comme négatifs ceux qui en sortent.

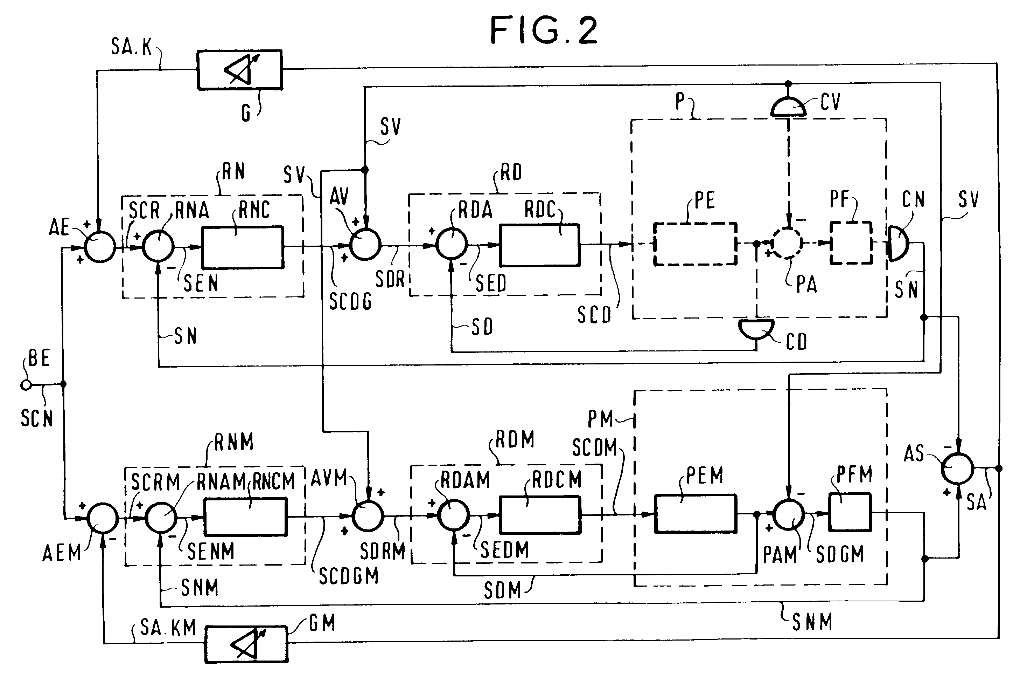

A l'aide de la figure 2, on va maintenant décrire, d'abord de manière générale, un dispositif de réglage d'un processus. Ce dispositif comporte les éléments suivants qui sont connus quant à leurs fonctions qui vont être indiquées:
- Une borne d'entrée BE pour recevoir un signal de consigne d'entrée SCN représentatif d'une valeur de consigne à donner à une grandeur à régler. Cette grandeur apparaît dans un processus industriel P. Sa valeur actuelle dépend de paramètres d'influence incluant au moins les valeurs antérieures et actuelles d'un signal de commande de processus SCD appliqué à un actionneur 4 de ce processus.
- Un capteur de sortie CN fournissant un signal de sortie de processus SN représentatif de ladite valeur actuelle de la grandeur à régler.
- Enfin un système de régulation de processus RN, AV, RD constitué de circuits de traitement de signaux et recevant un signal de consigne de régulation de processus SCR subissant des variations représentatives des variations dudit signal de consigne d'entrée SCN. Ce système de régulation reçoit en outre, au moins, ledit signal de sortie de processus SN. Il traite des valeurs antérieures et actuelles des signaux qu'il reçoit pour fournir ledit signal de commande de processus SCD, de manière à limiter les écarts actuels et futurs entre lesdites valeurs de consigne et actuelle de ladite grandeur à régler.

Selon la présente invention ce dispositif de réglage comporte en outre un modèle d'ensemble constitué de circuits de traitement de signaux et comportant lui même les organes suivants:
- Un modèle de processus PM recevant un signal de commande de modèle SCDM et des signaux SV représentatifs de tous éventuels dits paramètres d'influence autres que lesdites valeurs du signal de commande de processus SCD. Ce modèle traite les signaux qu'il reçoit pour fournir un signal de sortie de modèle SNM de manière que la valeur prise par ce signal de sortie de modèle à la suite et en présence de valeurs antérieures et actuelles de ce signal de commande de modèle évolue similairement à la valeur qu'aurait prise ledit signal de sortie de processus SN à la suite et en présence de valeurs antérieures et actuelles dudit signal de commande de processus si ces dernières valeurs avaient été respectivement égales aux dites valeurs antérieures et actuelles de ce signal de commande de modèle.
- Enfin un système de régulation de modèle RNM, AVM, RDM recevant un signal de consigne de régulation de modèle SCRM, ledit signal de sortie de modèle, et tout signal tel que SV reçu par ledit système de régulation de processus et autre que lesdits signaux de commande et de sortie de processus. Ce système de régulation de modèle traite les valeurs antérieures et actuelles des signaux qu'il reçoit pour fournir ledit signal de commande de modèle SCDM de manière que la valeur prise par ce dernier à la suite et en présence de valeurs antérieures et actuelles desdits signaux de consigne de régulation de modèle et de sortie de modèle évolue similairement à la valeur qu'aurait prise ledit signal de commande de processus SCD à la suite et en présence de valeurs antérieures et actuelles desdits signaux de consigne de régulation de processus et de sortie de processus si ces dernières valeurs avaient été respectivement égales auxdites valeurs antérieures et actuelles des signaux de consigne de régulation de modèle et de sortie de modèle.

Ce dispositif de réglage comporte encore les organes suivants:
- Un comparateur de sortie AS recevant lesdits signaux de sortie de processus SN et de sortie de modèle SNM et fournissant un signal d'écart de modèle SA représentatif d'un écart de modèle SNM-SN apparaissant entre ce signal de sortie de modèle et ce signal de sortie de processus.
- Un correcteur de régulation de processus constitué d'un amplificateur G et d'un sommateur AE. Ce correcteur reçoit le signal d'écart de modèle SA. Il lui applique un gain de correction de processus K tout en l'additionnant algébriquement au signal de consigne d'entrée SCN. Il forme ainsi le signal de consigne de régulation de processus SCR = SCN + K.SA. On constitue ainsi une boucle de contre réaction de correction de processus tendant à rapprocher le signal de sortie de processus SN du signal de sortie de modèle SNM.
- Enfin un correcteur de régulation de modèle constitué d'un amplificateur GM et d'un sommateur AEM. Ce correcteur reçoit le signal d'écart de modèle SA. Il lui applique un gain de correction de modèle KM tout en l'additionnant algébriquement au signal de consigne d'entrée SCN. Il forme ainsi le signal de consigne de régulation de modèle SCRM = SCN - KM.SA. On constitue ainsi une boucle de contre-réaction de correction de modèle tendant à rapprocher le signal de sortie de modèle SNM du signal de sortie de processus SN.

De préférence le gain de correction de modèle KM est supérieur au gain de correction de processus K.

Le modèle de processus PM présente des fonctions de transfert constituant des améliorations et de préférence des simplifications de celles du processus industriel P. Au contraire les organes du système de régulation de modèle RNM, AVM, RDM présentent des fonctions de transfert identiques à celles des organes homologues du système de régulation de processus RN, AV, RD, respectivement.

De manière un peu plus particulière ladite grandeur à régler est constituée par un niveau de remplissage d'un récipient 2 par un fluide occupant des volumes internes à ce récipient, ce niveau étant tel que le niveau de pression d'un gaz ou le niveau de la surface libre d'un liquide. Ledit actionneur 4 commande alors un débit de ce fluide passant par un passage de réglage 6 en entrée-sortie de ce récipient et constituant un débit de réglage. Le dispositif de réglage comporte en outre un capteur de débit de réglage CD fournissant un signal de débit de réglage de processus SD représentatif de ce débit de réglage.

Le système de régulation de processus est alors constitué par des organes qui seront dits ci-après "de processus" parce qu'ils sont étroitement associés au processus P. Ces organes forment un régulateur de niveau de processus RN et un régulateur de débit de processus RD.

Le régulateur de niveau de processus RN comporte d'abord un comparateur de niveau de processus RNA recevant d'une part ledit signal de sortie de processus représentatif dudit niveau, d'autre part ledit signal de consigne de régulation de processus SCR. Ce comparateur fournit un signal d'écart de niveau de processus SEN représentatif de l'écart de ce signal de sortie de processus par rapport à ce signal de consigne de régulation de processus. Le régulateur RN comporte ensuite un circuit de régulation de niveau de processus RNC comportant au moins une voie à action proportionnelle, dérivée, intégrale et/ou retardatrice. Ce circuit reçoit ledit signal d'écart de niveau de processus SEN et fournit un signal de consigne de débit global de processus SCDG représentatif d'un débit global souhaitable dudit fluide en entrée-sortie dudit récipient. Ce débit souhaitable est prévu pour limiter lesdits écarts actuels et futurs.

Le régulateur de débit de processus RD comporte d'abord un comparateur de débit de processus RDA recevant d'une part ledit signal de débit de réglage de processus SD, d'autre part un signal de consigne de débit de réglage SDR formé à partir dudit signal de consigne de débit global de processus SCDG. Ce comparateur fournit un signal d'écart de débit de processus SED représentatif d'un écart de ce signal de débit de réglage de processus par rapport à ce signal de consigne de débit de réglage de processus.

Le régulateur RD comporte ensuite un circuit de régulation de débit de processus RDC comportant au moins une voie à action proportionnelle, dérivée, intégrale et/ou retardatrice. Ce circuit reçoit ledit signal d'écart de débit de processus SED et fournit en réponse ledit signal de commande de processus SCD.

Le système de régulation de modèle est constitué d'organes de modèle homologues desdits organes de processus du système de régulation de processus pour recevoir, traiter et fournir des signaux de modèle homologues des signaux de processus reçus, traités et fournis par ces organes de processus, respectivement. Ces organes de modèle comportent plus précisément un régulateur de niveau de modèle RNM et un régulaceur de débit de modèle RDM.

Le régulateur de niveau de modèle RNM comporte d'abord un comparateur de niveau de modèle RNAM recevant d'une part un signal de niveau de modèle SNM constitué par ledit signal de sortie de modèle, d'autre part ledit signal de consigne de régulation de modèle SCRM. Ce comparateur fournit un signal d'écart de niveau de modèle SENM représentatif de l'écart de ce signal de niveau de modèle par rapport à ce signal de consigne de régulation de modèle. Le régulateur RNM comporte ensuite un circuit de régulation de niveau de modèle RNCM comportant au moins une voie à action proportionnelle, dérivée, intégrale et/ou retardatrice. Ce circuit reçoit ledit signal d'écart de niveau de modèle SENM et fournit un signal de consigne de débit global de modèle SCDGM.

Le régulateur de débit de modèle RDM comporte d'abord un comparateur de débit de modèle RDAM recevant d'une part un signal de débit de réglage de modèle SDM fourni par ledit modèle de processus PM en réponse audit signal de commande de modèle SCDM. Ce modèle de processus forme le signal SDM de manière que cette réponse constitue une simulation de l'action que ledit signal de commande de processus SCD exerce dans ledit processus P sur ledit signal de débit de réglage de processus SD. Ce comparateur reçoit d'autre part un signal de consigne de débit de réglage de modèle SDRM formé à partir dudit signal de consigne de débit global de modèle SCDGM. Il fournit un signal d'écart de débit de modèle SEDM représentatif d'un écart de ce signal de débit de réglage de modèle par rapport à ce signal de consigne de débit de réglage de modèle.

Le régulateur de débit de modèle RDM comporte ensuite un circuit de régulation de débit de modèle RDCM comportant au moins une voie à action proportionnelle, dérivée, intégrale et/ou retardatrice. Ce circuit reçoit ledit signal d'écart de débit de modèle SEDM et fournit en réponse ledit signal de commande de modèle SCDM.

La présente invention trouve avantageusement application dans le cas où ledit récipient 2 présente un deuxième passage 8 d'entrée-sortie dudit fluide. Un capteur de deuxième débit CV est alors disposé pour fournir un signal de deuxième débit SV représentatif d'un débit dudit fluide passant par ce deuxième passage et constituant un deuxième débit. La somme algébrique dudit débit de réglage et de ce deuxième débit constitue alors un débit global de processus.

Dans ce cas, selon la présente invention, le modèle de processus PM comporte les organes suivants:
- Un modèle de débit PEM recevant ledit signal de commande de modèle SCDM et le traitant pour simuler l'action exercée par ledit signal de commande de processus SCD sur ledit signal de débit de réglage de processus par l'intermédiaire dudit actionneur 4, dudit débit de réglage et dudit capteur de débit de réglage CD. Ce modèle de débit fournit en réponse ledit signal de débit de réglage de modèle SDM.
- Un additionneur de débits de modèle PAM additionnant algébriquement lesdits signaux de débit de réglage de modèle SDM et de deuxième débit -SV pour fournir un signal de débit global de modèle SDGM.
- Enfin un circuit d'intégration de débit de modèle PFM traitant ledit signal de débit global de modèle de manière à simuler l'action que ledit débit global de processus exerce sur ledit signal de sortie de processus SN. Cette action du débit global de processus s'exerce notamment par les intermédiaires suivants: D'abord le niveau de remplissage resultant des valeurs passées de ce débit global et desdits volumes internes dudit récipient 2. Ensuite la réponse du capteur de niveau CN à ce niveau de remplissage pour fournir ledit signal de sortie de processus.

Le circuit d'intégration de débit de modèle PFM fournit ledit signal de sortie de modèle SNM en résultat du traitement qu'il effectue sur le signal de débit global de modèle SDGM. Il peut être constitué par un filtre de constante de temps convenable.

Les organes de modèle PEM, PAM et PFM peuvent être considérés comme des représentations de fonctions se réalisant au sein du processus P et symbolisées par des organes de processus PE, PA et PF respectivement homologues de ces organes de modèle. Il doit cependant être compris que, comme dans l'exemple décrit, ces organes de processus peuvent être seulement virtuels, seules les fonctions qu'ils symbolisent apparaissant dans le processus. C'est pourquoi ces organes de processus virtuels sont représentés en traits tiretés.

De préférence le système de régulation de processus RN, AV, RD comporte en outre un correcteur de consigne de débit de processus AV recevant ledit signal de consigne de débit global de processus SCDG et en soustrayant algébriquement ledit signal de deuxième débit -SV pour fournir ledit signal de débit de réglage de processus SDR = SCDG + SV.

Le système de régulation de modèle RNM, AVM, RDM comporte alors en outre un correcteur de consigne de débit de modèle AVM recevant ledit signal de consigne de débit global de modèle SCDGM et en soustrayant algébriquement ledit signal de deuxième débit -SV pour fournir ledit signal de débit de réglage de modèle SDRM = SCDGM + SV.

De manière plus particulière ledit récipient est le générateur de vapeur 2, ladite grandeur à régler est le niveau d'eau alimentaire dans ce générateur, ledit débit de réglage est le débit d'eau alimentaire entrant dans ce générateur par la canalisation 6, et ledit deuxième débit est le débit de vapeur extrait de ce générateur par la canalisation 8.

## Revendications

1. Procédé de réglage d'un processus (P) par l'intermédiaire d'un système de régulation (RN, AV, RD), ce procédé étant caractérisé par le fait qu'on utilise des modèle (PM-RNM, AVM, RDM) de ce processus et de ce système de régulation pour corriger un signal de consigne d'entrée (SCN) avant de l'appliquer à ce système de régulation.

2. Procédé selon la revendication 1, caractérisé par le fait que lesdits modèles sont sensibles à un signal extérieur (SV) représentatif d'une grandeur extérieure imposée audit processus en dehors dudit système de régulation (RN, AV, RD).

3. Procédé de réglage d'un processus selon la revendication 1, procédé selon lequel on applique un signal de consigne de régulation de processus (SCR) à un système de régulation de processus (RN, AV, RD) comparant ce signal de consigne à un signal de sortie de processus (SN) pour commander un actionneur (4) agissant sur une grandeur à régler apparaissant dans un processus (P) et mesurée par ledit signal de sortie de processus (SN),
ce procédé étant caractérisé par le fait qu'on établit des modèles (PM, RNM, AVM, RDM) dudit processus (P) avec son dit système de régulation (RN, AV, RD) pour fournir un signal de sortie de modèle (SNM) homologue dudit signal de sortie de processus (SN), en réponse aux valeurs actuelles et antérieures d'un signal de consigne de régulation de modèle (SCRM) homologue dudit signal de consigne de régulation de processus (SCR) et appliqué au dit modèle (RNM, AVM, RDM) du système de régulation de processus,
- on compare lesdits signaux de sortie de processus et de modèle pour fournir un signal d'écart de modèle (SA),
- et on corrige dans deux sens de correction opposés un signal de consigne d'entrée dudit dispositif (SCN) par ledit signal d'écart de modèle pour fournir les deux dits signaux de consigne de régulation de processus (SCR = SCN + SA.K) et de consigne de régulation de modèle (SCRM = SCN - SA.KM) respectivement, lesdits sens de correction étant ceux qui tendent à rapprocher l'un de l'autre lesdits signaux de sortie de processus (SN) et de modèle (SNM).

4. Dispositif de réglage d'un processus, ce dispositif comportant:
- Une borne d'entrée (BE) pour recevoir un signal de consigne d'entrée (SCN) représentatif d'une valeur de consigne à donner à une grandeur à régler qui apparait dans un processus industriel (P) et dont une valeur actuelle dépend de paramètres d'influence incluant au moins les valeurs antérieures et actuelle d'un signal de commande de processus (SCD) appliqué à un actionneur (4) de ce processus.
- un capteur de sortie (CN) pour fournir un signal de sortie de processus (SN) représentatif de ladite valeur actuelle de la grandeur à régler,
- et un système de régulation de processus (RN, AV, RD) constitué de circuits de traitement de signaux et recevant un signal de consigne de régulation de processus (SCR) subissant des variations représentatives des variations dudit signal de consigne d'entrée (SCN), ce système de régulation recevant en outre, au moins, ledit signal de sortie de processus (SN) et traitant des valeurs antérieures et actuelles des signaux qu'il reçoit pour fournir ledit signal de commande de processus (SCD), de manière à limiter les écarts actuels et futurs entre lesdites valeurs de consigne et actuelle de ladite grandeur à régler,
ledit dispositif de réglage étant caractérisé par le fait qu'il comporte en outre un modèle d'ensemble constitué de circuits de traitement de signaux et comportant lui même:
- un modèle de processus (PM) recevant un signal de commande de modèle (SCDM) et des signaux (SV) représentatifs de tous éventuels dits paramètres d'influence autres que lesdites valeurs du signal de commande de processus (SCD), ce modèle traitant les signaux qu'il reçoit pour fournir un signal de sortie de modèle (SNM) de manière que la valeur prise par ce signal de sortie de modèle à la suite et en présence de valeurs antérieures et actuelle de ce signal de commande de modèle évolue similairement à la valeur qu'aurait prise ledit signal de sortie de processus (SN) à la suite et en présence de valeurs antérieures et actuelle dudit signal de commande de processus si ces dernières valeurs avaient été respectivement égales auxdites valeurs antérieures et actuelle de ce signal de commande de modèle,
- et un système de régulation de modèle (RNM, AVM, RDM) recevant un signal de consigne de régulation de modèle, (SCRM) ledit signal de sortie de modèle, et tout signal (SV) reçu par ledit système de régulation de processus autre que lesdits signaux de commande et de sortie de processus, ce modèle traitant les valeurs antérieures et actuelles des signaux qu'il reçoit pour fournir ledit signal de commande de modèle (SCDM) de manière que la valeur prise par ce dernier à la suite et en présence de valeurs antérieures et actuelles desdits signaux de consigne de régulation de modèle et de sortie de modèle évolue similairement à la valeur qu'aurait prise ledit signal de commande de processus (SCD) à la suite et en présence de valeur antérieures et actuelles desdits signaux de consigne de régulation de processus et de sortie de processus si ces dernières valeurs avaient été respectivement égales auxdites valeurs antérieures et actuelles des signaux de consigne de régulation de modèle et de sortie de modèle,
- ledit dispositif de réglage comportant encore:
- un comparateur de sortie (AS) recevant lesdits signaux de sortie de processus (SN) et de sortie de modèle (SNM) et fournissant un signal d'écart de modèle (SA) représentatif d'un écart de modèle (SNM - SN) apparaissant entre ce signal de sortie de modèle et ce signal de sortie de processus,
- un correcteur de régulation de processus (G, AE) recevant ledit signal d'écart de modèle (SA) et lui appliquant un gain de correction de processus (K) tout en l'additionnant algébriquement audit signal de consigne d'entrée (SCN) pour former ledit signal de consigne de régulation de processus (SCR = SCN + K.SA) de manière à constituer une boucle de contre réaction de correction de processus tendant à rapprocher ledit signal de sortie de processus (SN) dudit signal de sortie de modèle (SNM),
- et un correcteur de régulation de modèle (GM, AEM) recevant ledit signal d'écart de modèle (SA) et lui appliquant un gain de correction de modèle (KM) tout en l'additionnant algébriquement audit signal de consigne d'entrée (SCN) pour former ledit signal de consigne de régulation de modèle (SCRM = SCN - KM.SA) de manière à constituer une boucle de contre-réaction de correction de modèle tendant à rapprocher ledit signal de sortie de modèle (SNM) dudit signal de sortie de processus (SN).

5. Dispositif selon la revendication 4, caractérisé par le fait que ledit gain de correction de modèle (KM) est supérieur audit gain de correction de processus (K).

6. Dispositif selon la revendication 4, caractérisé par le fait que ledit modèle de processus (PM) présente des fonctions de transfert constituant des améliorations de celles dudit processus industriel (P), les organes dudit système de régulation de modèle (RNM, AVM, RDM) présentant des fonctions de transfert identiques à celles des organes homologues dudit système de régulation de processus (RN, AV, RD), respectivement.

7. Dispositif selon la revendication 4, dans lequel ladite grandeur à régler est constituée par un niveau de remplissage d'un récipient (2) par un fluide occupant des volumes internes à ce récipient, ledit actionneur (4) commandant un débit de ce fluide passant par un passage de réglage (6) en entrée-sortie de ce récipient et constituant un débit de réglage,
- ledit dispositif de réglage comportant en outre un capteur de débit de réglage (CD) fournissant un signal de débit de réglage de processus (SD) représentant la valeur dudit débit de réglage,
- ledit système de régulation de processus étant constitué d'organes de processus comportant un régulateur de niveau de processus (RN) comportant lui même:
- un comparateur de niveau de processus (RNA) recevant d'une part ledit signal de sortie de processus (SN), d'autre part ledit signal de consigne de régulation de processus (SCR), et fournissant un signal d'écart de niveau de processus (SEN) représentatif de l'écart de ce signal de niveau de processus par rapport à ce signal de consigne de régulation de processus,
- et un circuit de régulation de niveau de processus (RNC) comportant au moins une voie à action proportionnelle, dérivée, intrégrale et/ou retardatrice, ce circuit recevant ledit signal d'écart de niveau de processus (SEN) et fournissant un signal de consigne de débit global de processus (SCDG) représentatif d'un débit global souhaitable dudit fluide en entrée-sortie dudit récipient, ce débit étant souhaitable pour limiter lesdits écarts actuel et futurs,
- lesdits organes de processus du système de régulation de processus comportant en outre un régulateur de débit de processus (RD) comportant lui-même:
- un comparateur de débit de processus (RDA) recevant d'une part ledit signal de débit de réglage de processus (SD), d'autre part un signal de consigne de débit de réglage de processus (SDR) formé à partir dudit signal de consigne de débit global de processus (SCDG), ce comparateur fournissant un signal d'écart de débit de processus (SED) représentatif d'un écart de ce signal de débit de réglage de processus par rapport à ce signal de consigne de débit de réglage de processus,
- et un circuit de régulation de débit de processus (RDC) comportant au moins une voie à action proportionnelle, dérivée, intégrale et/ou retardatrice, ce circuit recevant ledit signal d'écart de débit de processus (SED) et fournissant en réponse ledit signal de commande de processus (SCD),
- ledit système de régulation de modèle étant constitué d'organes de modèle homologues desdits organes de processus dudit système de régulation de processus pour recevoir, traiter et fournir des signaux de modèle homologues desdits signaux de processus reçus, traités et fournis par ces organes de processus, respectivement, ces organes de modèle comportant un régulateur de niveau de modèle (RNM) comportant lui même:
- un comparateur de niveau de modèle (RNAM) recevant d'une part un signal de niveau de modèle (SNM) constitué par ledit signal de sortie de modèle, d'autre part ledit signal de consigne de régulation de modèle (SCRM) et fournissant un signal d'écart de niveau de modèle (SENM) représentatif de l'écart de ce signal de niveau de modèle par rapport à ce signal de consigne de régulation de modèle,
- et un circuit de régulation de niveau de modèle (RNCM) comportant au moins une voie à action proportionnelle, dérivée, intégrale et/ou retardatrice, ce circuit recevant ledit signal d'écart de niveau de modèle (SENM) et fournissant un signal de consigne de débit global de modèle (SCDGM),
- lesdits organes de modèle du système de régulation de modèle comportant en outre un régulateur de débit de modèle (RDM) comportant lui même:
- un comparateur de débit de modèle (RDAM) recevant d'une part un signal de débit de réglage de modèle (SDM) fourni par ledit modèle de processus (PM) en réponse audit signal de commande de modèle (SCDM) de manière que cette réponse constitue une simulation de l'action que ledit signal de commande de processus (SCD) exerce dans ledit processus (P) sur ledit signal de débit de réglage de processus (SD), d'autre part un signal de consigne de débit de réglage de modèle (SDRM) formé à partir dudit signal de consigne de débit global de modèle (SCDGM), ce comparateur fournissant un signal d'écart de débit de modèle (SEDM) représentatif d'un écart de ce signal de débit de réglage de modèle par rapport à ce signal de consigne de débit de réglage de modèle,
- et un circuit de régulation de débit de modèle (RDCM) comportant au moins une voie à action porportionnelle, dérivée, intégrale et/ou retardatrice, ce circuit recevant ledit signal d'écart de débit de modèle (SEDM) et fournissant en réponse ledit signal de commande de modèle (SCDM).

8. Dispositif selon la revendication 7, ledit récipient (2) étant en outre muni d'un deuxième passage (8) d'entrée-sortie dudit fluide, et d'un capteur de deuxième débit (CV) pour fournir un signal de deuxième débit (-SV) représentatif d'un débit dudit fluide passant par ce deuxième passage et constituant un deuxième débit, la somme algébrique dudit débit de réglage et de ce deuxième débit constituant un débit global de processus,
- ledit dispositif de réglage étant caractérisé par le fait que ledit modèle de processus (PM) comporte:
- un modèle de débit (PEM) recevant ledit signal de commande de modèle(SCDM) et le traitant pour simuler l'action exercée par ledit signal de commande de processus (SCD) sur ledit signal de débit de réglage de processus par l'intermédiaire dudit actionneur (4), dudit débit de réglage et dudit capteur de débit de réglage (CD), ce modèle de débit fournissant en réponse ledit signal de débit de réglage de modèle (SDM),
- un additionneur de débits de modèle (PAM) additionnant algébriquement lesdits signaux de débit de réglage de modèle (SDM) et de deuxième débit (-SV) pour fournir un signal de débit global de modèle (SDGM),
- et un circuit d'intégration de débit de modèle (PFM) traitant ledit signal de débit global de modèle (SDGM) de manière à simuler l'action que ledit débit global de processus exerce sur ledit signal de sortie de processus (SN) par l'intermédiaire notamment d'abord dudit niveau de remplissage résultant des valeurs passées de ce débit global et desdits volumes internes dudit récipient (2), ensuite de la réponse dudit capteur de niveau (CN) à ce niveau de remplissage pour fournir ledit signal de sortie de processus, ce circuit d'intégration de débit de modèle (PFM) fournissant ledit signal de sortie de modèle (SNM) en résultat de ce traitement.

9. Dispositif selon la revendication 8, caractérisé par le fait que ledit système de régulation de processus (RN, AV, RD) comporte en outre un correcteur de consigne de débit de processus (AV) recevant ledit signal de consigne de débit global de processus (SCDG) et en soustrayant algébriquement ledit signal de deuxième débit (SV) pour fournir ledit signal de consigne de débit de réglage de processus ( SDR = SCDG + SV),
- ledit système de régulation de modèle (RNM, AVM, RDM) comportant en outre un correcteur de consigne de débit de modèle (AVM) recevant ledit signal de consigne de débit global de modèle (SCDGM) et en soustrayant algébriquement ledit signal de deuxième débit (-SV) pour fournir ledit signal de consigne de débit de réglage de modèle (SDRM = SCDGM + SV).

10. Dispositif selon la revendication 9, caractérisé par le fait que ledit récipient (2) est un générateur de vapeur d'une chaudière nucléaire, ladite grandeur à régler est un niveau d'eau alimentaire dans ce générateur, ledit débit de réglage est un débit d'eau alimentaire entrant dans ce générateur, ledit deuxième débit étant un débit de vapeur extrait de ce générateur vers un utilisateur de vapeur extérieur à cette chaudière.

## Patentansprüche

1. Verfahren zur Regelung eines Prozesses (P) mittels eines Regelsystems (RN, AV, RD), dadurch gekennzeichnet, daß Modelle (PM-RNM, AVM, RDM) des Prozesses und des Regelsystems verwendet werden, um ein Eingangssollsignal (SCN) zu korrigieren, bevor es an das Regelsystem angelegt wird.

2. Verfahren nach Anspruch 1, dadurch gekennzeichnet, daß die Modelle auf ein externes Signal (SV) ansprechen, das eine äußere Größe darstellt, die auf den Prozeß von außerhalb des Regelsystems (RN, AV, RD) einwirkt.

3. Verfahren zur Regelung eines Prozesses nach Anspruch 1, bei dem ein Sollsignal zur Regelung des Prozesses (SCR) an ein Regelsystem für den Prozeß (RN, AV, RD) angelegt wird, das das Sollsignal mit einem Ausgangssignal des Prozesses (SN) zur Ansteuerung eines Stellglieds (4) vergleicht, das auf eine im Prozeß (P) auftretende, zu regelnde Größe einwirkt, die durch das Ausgangssignal des Prozesses (SN) gemessen wird,
dadurch gekennzeichnet, daß Modelle (PM, RNM, AVM, RDM) des Prozesses (P) mit seinem Regelsystem (RN, AV, RD) erstellt werden, um ein Ausgangssignal des Modells (SNM) zu erzeugen, das zum Ausgangssignal des Prozesses (SN) homolog ist, nach Maßgabe momentaner und früherer Werte eines Sollsignals zur Regelung des Modells (SCR), das homolog zum Sollsignal zur Regelung des Prozesses (SCR) ist und das an das Modell (RNM, AVM, RDM) des Systems zur Regelung des Prozesses angelegt wird,
- die Ausgangssignale des Prozesses und des Modells verglichen werden, um ein Abweichungssignal des Modells (SA) zu erzeugen,
- man ein Eingangssollsignal der Vorrichtung (SCN) in zwei entgegengesetzte Korrekturrichtungen mittels des Abweichungssignals des Modells korrigiert, um ein Sollsignal zur Regelung des Prozesses (SCR = SCN + SA.K) und ein Sollsignal zur Regelung des Modells (SCRM = SCN - SA.KM) zu erzeugen, wobei die Korrekturrichtungen solche sind, die dazu führen, daß sich die Ausgangssignale des Prozesses (SN) und des Modells (SNM) einander annähern.

4. Vorrichtung zur Regelung eines Prozesses, mit:
- einem Eingangsanschluß (BE) zum Empfangen eines Eingangssollsignals (SCN), das einen Sollwert für eine zu regelnde Größe darstellt, die in einem industriellen Prozeß (P) auftritt und wovon ein momentaner Wert von Einflußparametern einschließlich zumindest der vorherigen und der momentanen Werte eines Steuersignals für den Prozeß (SCD) abhängt, das an ein Stellglied (4) des Prozesses angelegt wird,
- einem Ausgangsaufnehmer (CN), um ein Ausgangssignal des Prozesses (SN) zu liefern, das den momentanen Wert der zu regelnden Größe darstellt,
- und einem Regelsystem für den Prozeß (RN, AV, RD), das durch Signalverarbeitungsschaltungen gebildet wird und das ein Sollsignal für die Prozeßregelung (SCR) empfängt, das Veränderungen erfährt, die Veränderungen des Eingangssollsignals (SCN) darstellen, wobei das Regelsystem außerdem zumindest das Prozeßausgangssignal (SN) empfängt und vorherige und momentane Signalwerte, die es empfängt, bearbeitet, um das Steuersignal des Prozesses (SCD) bereitzustellen, um die momentanen und zukünftigen Abweichungen zwischen den tatsächlichen und den Sollwerten der zu regelnden Größe zu begrenzen, wobei die Vorrichtung dadurch gekennzeichnet ist, daß sie ein Modell aufweist, das aus Signalbearbeitungsschaltungen aufgebaut ist und aufweist:
- ein Modell des Prozesses (PM), das ein Signal zur Steuerung des Modells (SCDM) empfängt sowie Signale (SV), die alle möglichen Einflußparameter zusätzlich zu den Werten der Prozeßsteuersignale (SCD) darstellen, wobei das Modell die von ihm empfangenen Signale verarbeitet, um ein Ausgangssignal des Modells (SNM) so zu erzeugen, daß der von diesem Ausgangssignal des Modells zuletzt im Hinblick auf vorherige und momentane Werte des Steuerungssignals des Modells eingenommene Wert sich ähnlich entwickelt wie der Wert, den das Prozeßausgangssignal (SN) zuletzt im Hinblick auf vorherige und momentane Werte des Prozeßsteuersignals eingenommen hat, wenn die letztgenannten Werte jeweils gleich den früheren und momentanen Werten des Modellsteuerungssignals waren,
- und ein Modellregelsystem (RNM, AVM, RDM), das ein Sollsignal zur Modellregelung (SCRM) empfängt, das Modellausgangssignal und alle Signale (SV), die vom Prozeßregelsystem zusätzlich zum Steuerungssignal und dem Prozeßausgang empfangen wurden, wobei das Modell die vorherigen und momentanen Signalwerte, die es empfängt, so bearbeitet, um das Modellsteuerungssignal (SCDM) zu erhalten, so daß der von letzterem schließlich im Hinblick auf vorherige und momentane Werte der Regelsollsignale des Modells eingenommene Wert, sich ähnlich entwickelt zu dem Wert, den das Prozeßsteuersignal (SCD) zuletzt im Hinblick auf frühere und momentane Werte der Sollsignale der Regelung des Prozesses und des Prozeßausgangs einnimmt, wenn die letztgenannten Werte jeweils gleich den früheren und momentanen Sollsignalwerten zur Modellregelung bzw. des Modellausgangs sind,
- wobei die Regelvorrichtung außerdem aufweist:
- einen Ausgangsvergleicher (AS), der das Prozeßausgangssignal (SN) und das Modellausgangssignal (SNM) empfängt und ein Modellabweichungssignal (SA) erzeugt, das eine Modellabweichung (SNM - SN) darstellt, die zwischen dem Modellausgangssignal und dem Prozeßausgangssignal auftritt,
- eine Prozeßregelkorrektur (G, AE), die das Modellabweichungssignal (SA) empfängt, auf es eine Prozeßkorrekturverstärkung (K) anwendet und es algebraisch zum Eingangssollsignal (SCN) addiert, um das Prozeßregelsollsignal (SCR = SCN + K.SA) so zu bilden, daß sich eine gegenkoppelnde Schleife zur Prozeßkorrektur bildet, die dazu führt, daß sich das ProzeßausgangsSignal (SN) dem Modellausgangssignal (SNM) annähert,
- und eine Modellregelkorrektur (GM, AEM), die das Modellabweichungssignal (SA) empfängt und es mit einer Modellkorrekturverstärkung (KM) versieht und dies algebraisch zum Eingangssollsignal (SCN) addiert, um das Sollsignal für die Modellregelung (SCRM = SCN - KM.SA) so zu bilden, daß sich eine gegenkoppelnde Schleife zur Modellkorrektur bildet, die dazu führt, daß sich das Modellausgangssignal (SNM) des Prozeßausgangssignal (SN) annähert.

5. Vorrichtung nach Anspruch 4, dadurch gekennzeichnet, daß die Modellkorrekturverstärkung (KM) höher ist als die Prozeßkorrekturverstärkung (K).

6. Vorrichtung nach Anspruch 4, dadurch gekennzeichnet, daß das Prozeßmodell (PM) Übertragungsfunktionen aufweist, die gegenüber denen des industriellen Prozesses (P) verbessert sind, wobei die Organe des Modellregelsystems (RNM, AVM, RDM) Übertragungsfunktionen aufweisen, die jeweils identisch zu denen der homologen Organe des Prozeßregelsystems (RN, AV, RD) sind.

7. Vorrichtung nach Anspruch 4, bei der die zu regelnde Größe durch den Füllstand eines Behälters (2) durch ein Fluid gebildet wird, das den Innenraum des Behälters einnimmt, wobei das Stellglied (4) die Flußrate des durch eine Regelleitung (6) laufenden Fluids am Einlaß-Auslaß des Behälters steuert, das eine Regelflußmenge darstellt,
- wobei die Regelvorrichtung einen Aufnehmer für den geregelten Fluß (CD) aufweist, der ein Signal des Prozeßregelflusses (SD) liefert, das den Wert des Regelflusses darstellt,
- wobei das Prozeßregelsystem durch Prozeßorgane gebildet ist, die einen Prozeßpegelregler (RN) aufweisen, der aufweist:
- einen Vergleicher für den Prozeßpegel (RNA), der einerseits das Prozeßausgangssignal (SN) und andererseits das Sollsignal für die Prozeßregelung (SCR) empfängt und ein Abweichungssignal für den Prozeßpegel (SEN) liefert, das die Abweichung des Prozeßpegelsignals bezüglich des Sollsignals für die Prozeßregelung darstellt,
- und eine Schaltung zur Prozeßpegelregelung (RNC), die zumindest ein Proportional-, Ableitungs-, Integrierungs- und/oder Verzögerungsglied aufweist, wobei die Schaltung das Prozeßpegelabweichungssignal (SEN) empfängt und ein globales Flußmengensollsignal des Prozesses (SCDG) liefert, das eine globale Flußmenge darstellt, die am Einlaß-Auslaß des Behälters wünschenswert ist, wobei die Flußmenge zur Begrenzung der momentanen und zukünftigen Abweichung wünschenswert ist,
- wobei die Prozeßorgane des Regelsystems des Prozesses außerdem einen Regler für die Flußmenge des Prozesses (RD) aufweisen, der aufweist:
- einen Prozeßflußmengenvergleicher (RDA), der einerseits das Prozeßregelungsflußmengensignal (SD) und andererseits das Prozeßregelungsflußmengensollsignal (SDR) empfängt, das ausgehend vom globalen Flußmengensollsignal des Prozesses (SCDG) gebildet wurde, wobei der Vergleicher ein Prozeßflußmengenabweichungssignal (SED) bildet, das die Abweichung des Prozeßregelungsflußmengensignals bezüglich des Prozeßregelungsflußmengensollsignals darstellt,
- und eine Prozeßflußmengenregelungsschaltung (RDC), die zumindest ein Proportional-, Ableitungs-, Integrierungs- und/oder Verzögerungsglied aufweist, wobei die Schaltung das Prozeßflußmengenabweichungssignal (SED) empfängt und daraufhin das Prozeßsteuerungssignal (SCD) liefert,
- wobei das Modellregelsystem durch Modellorgane gebildet wird, die homolog zu den Prozeßorganen des Prozeßregelsystems sind, um die Modellsignale zu empfangen, zu verarbeiten und bereitzustellen, die homolog zu den empfangenen verarbeiteten und bereitgestellten Prozeßsignalen jeweils aus den Prozeßorganen sind, wobei die Modellorgane einen Modellpegelregler (RNM) aufweisen, der selbst aufweist:
- einen Modellpegelvergleicher (RNAM), der einerseits ein Modellpegelsignal (SNM) empfängt, das durch das Modellausgangssignal gebildet wird, und andererseits das Modellregelungssollsignal (SCRM), und der ein Modellpegelabweichungssignal (SENM) liefert, das die Abweichung des Modellpegelsignals bezüglich des Modellregelsollsignals darstellt,
- eine Modellpegelregelschaltung (RNCM), die zumindest ein Proportional-, Ableitungs-, Integrierungs- und/oder Verzögerungsglied aufweist, wobei die Schaltung das Modellpegelabweichungssignal (SENM) empfängt und ein globales Flußmengensollsignal des Modells (SCDGM) liefert,
- wobei die Organe des Modells des Systems zur Regelung des Modells eine Modellflußmengenregelung (RDM) aufweisen, die ihrerseits aufweist:
- einen Modellflußmengenvergleicher (RDAM), der einerseits ein Modellregelflußmengensignal (SDM) empfängt, das vom Prozeßmodell (PM) auf das Modellsteuerungssignal (SCDM) hin so geliefert wird, daß diese Ant- . wort eine Simulation der Wirkung bildet, die das Prozeßsteuerungssignal (SCD) im Prozeß (P) auf das Prozeßregelflußmengensignal (SD) ausübt, und andererseits ein Modellregelungsflußmengensollsignal (SDRM), das ausgehend vom globalen Flußmengensollsignal des Modells (SCDGM) gebildet wurde, wobei der Vergleicher ein Modellflußmengenabweichungssignal (SEDM) liefert, das die Abweichung des Modellregelungsflußmengensignals bezüglich des Modellregelungsflußmengensollsignals darstellt,
- und eine Modellflußmengenregelungsschaltung (RDCM), die zumindest ein Proportional-, Ableitungs-, Integrierungs- und/oder Verzögerungsglied aufweist, wobei die Schaltung das Modellflußmengenabweichungssignal (SEDM) empfängt und daraufhin das Modellsteuerungssignal (SCDM) liefert.

8. Vorrichtung nach Anspruch 7, wobei der Behälter (2) mit einer zweiten Einlaß-Auslaßleitung (8) für das Fluid versehen ist und mit einem Aufnehmer für die zweite Flußmenge (CV), um ein Signal für die zweite Flußmenge (-SV) zu liefern, das eine Flußmenge des Fluids darstellt, das die zweite Leitung durchläuft und das eine zweite Flußmenge bildet, wobei die algebraische Summe der Regelflußmenge und der zweiten Flußmenge die globale Flußmenge des Prozesses bildet,
- dadurch gekennzeichnet, daß das Prozeßmodell (PM) aufweist:
- ein Flußmengenmodell (PEM), das das Modellsteuerungssignal (SCDM) empfängt und es bearbeitet, um die Wirkung zu simulieren, die von dem Prozeßsteuerungssignal (SCD) mittels des Stellglieds (4) auf das Prozeßregelungsflußmengensignal, die Regelungsflußmenge und den Aufnehmer für die Regelungsflußmenge (CD) ausgeübt wird, wobei das Flußmengenmodell daraufhin das Modellregelungsflußmengensignal (SDM) abgibt,
- einen Modellflußmengenaddierer (PAM), der algebraisch das Modellregelungsflußmengensignal (SDM) und das Signal der zweiten Flußmenge (-SV) addiert, um ein globales Flußmengensignal des Modells (SDGM) zu liefern,
- und eine Modellflußmengenintegrationsschaltung (PFM), die das globale Flußmengensignal des Modells (SDGM) so bearbeitet, daß die Wirkung simuliert wird, die die globale Flußmenge des Prozesses auf das Prozeßausgangssignal (SN) ausübt, insbesondere anfänglich mittels des sich aus den vergangenen Werten der globalen Flußmenge ergebenden Füllpegels und der inneren Volumina des Behälters (2), anschließend mittels der Ausgabe des Aufnehmers des Pegels (CN) am Füllpegel, um das Prozeßausgangssignal zu erzeugen, wobei die Modellflußmengenintegrationsschaltung (PFM) das Modellausgangssignal (SNM) als Ergebnis dieser Verarbeitung liefert.

9. Vorrichtung nach Anspruch 8, dadurch gekennzeichnet, daß das Prozeßregelsystem (RN, AV, RD) eine Korrektur für die Prozeßsollflußmenge (AV) aufweist, die das globale Flußmengensollsignal des Prozesses (SCDG) empfängt und davon algebraisch das Signal der zweiten Flußmenge (SV) abzieht, um das Prozeßregelflußmengensollsignal (SDR = SCDG' + SV) zu erzeugen,
- wobei das Modellregelsystem (RNM, AVM, RDM) eine Modellflußmengensollkorrektur (AVM) aufweist, die das globale Flußmengensollsignal des Modells (SCDGM) empfängt und davon algebraisch das Signal der zweiten Flußmenge (-SV) abzieht, um das Modellregelflußmengensollsignal (SDRM = SCDGM + SV) zu erzeugen.

10. Vorrichtung nach Anspruch 9, dadurch gekennzeichnet, daß der Behälter (2) ein Dampferzeuger eines Kernreaktors ist, die zu regelnde Größe der Versorgungswasserpegel im Erzeuger ist, die Regelflußmenge die in den Erzeuger einlaufende Versorgungswasserflußmenge ist, wobei die zweite Flußmenge die Dampfflußmenge ist, die vom Erzeuger zu einem Dampfverwender außerhalb des Reaktors geleitet wird.

## Claims

1. Method of controlling a process (P) by means of a control system (RN, AV, RD) characterised in that models (PM-RNM, AVM, RDM) of the process and the control system are used to correct an input set point signal (SCN) before it is fed to the control system.

2. Method according to claim 1 characterised in that said models are responsive to an external signal (SV) representing an external magnitude imposed on said process externally of said control system (RN, AV, RD).

3. Process control method according to claim 1 wherein a process control set point signal (SCR) is fed to a process control system (RN, AV, RD) which compares the set point signal with a process output signal (SN) to control an actuator (4) operating on a magnitude to be controlled which is featured in a process (P) and measured by said process output signal (SN),
characterised in that models (PM, RNM, AVM, RDM) of said process (P) and its control system (RN, AV, RD) are established to produce a model output signal (SNM) homologous to said process output signal (SN) in response to current and previous values of a model control set point signal (SCRM) homologous to said process control set point signal (SCR) and fed to said model (RNM, AVM, RDM) of the process control system,
• said process and model output signals are compared to produce a model error signal (SA), and
• an input set point signal (SCN) of said device is corrected in two respective opposite correction directions by said model error signal to supply said process control set point signal (SCR = SCN + SA.K) and said model control set point signal (SCRM = SCN - SA.KM), said correction directions being those which tend to reduce the error between said process output signal (SN) and said model output signal (SNM).

4. Process control device including:
• an input terminal (BE) to receive an input set point signal (SCN) representing a set point value to be assigned to a magnitude to be controlled which features in an industrial process (P) and a current value of which depends on influencing parameters which include at least the previous and current values of a process control signal (SCD) applied to an actuator (4) of the process,
• an output sensor (CN) to supply a process output signal (SN) representing said current value of the magnitude to be controlled, and
• a process control system (RN, AV, RD) made up of signal processing circuits and receiving a process control set point signal (SCR) subject to variations which represent variations in said input set point signal (SCN), the control system also receiving at least said process output signal (SN) and processing previous and current values of the signals that it receives to produce said process control signal (SCD) so as to limit current and future errors between said set point values and the current value of said magnitude to be controlled,
said control device being characterised in that it further includes a system model made up of signal processing circuits and including:
• a process model (PM), receiving a model control signal (SCDM) and signals (SV) representing any and all influencing parameters other than said values of the process control signal (SCD), the model processing the signals that it receives to supply a model output signal (SNM) whose value after and in the presence of previous and current values of the model control signal evolves in a similar manner to the value that said process output signal (SN) would have assumed after and in the presence of previous and current values of said process control signal if the latter values had been respectively equal to said previous and current values of the model control signal, and
• a model control system (RNM, AVM, RDM) receiving a model control set point signal (SCRM), said model output signal and any signal (SV) received by said process control system other than said process control and process output signals, the model processing previous and current values of the signals that it receives to supply said model control signal (SCDM) whose value after and in the presence of previous and current values of said model control set point signal and model output signal evolves in a similar manner to the value that said process control signal (SCD) would have assumed after and in the presence of previous and current values of said process control set point signal and process output signal if the latter values had been respectively equal to said previous and current values of the model control set point signal and model output signal,
• said control device further including:
• an output comparator (AS) receiving said process output signal (SN) and model output signal (SNM) and supplying a model error signal (SA) representing a model error (SNM - SM) between the model output signal and the process output signal,
• a process control corrector (G, AE) receiving said model error signal (SA) and applying to it a process correction gain (K) and adding it algebraically to said input set point signal (SCN) to form said process control set point signal (SCR = SCN + K.SA) to form a process control feedback loop tending to reduce the error between said process output signal (SN) and said model output signal (SNM), and
• a model control corrector (GM, AEM) receiving said model error signal (SA) and applying to it a model correction gain (KM) and adding it algebraically to said input set point signal (SCN) to form said model control set point signal (SCRM = SCN - KM.SA) to form a model control feedback loop tending to reduce the error between said model output signal (SNM) and said process output signal (SN).

5. Device according to claim 4 characterised in that said model correction gain (KM) is greater than said process correction gain (K).

6. Device according to claim 4 characterised in that said process model (PM) has transfer functions which are improvements on those of said industrial process (P), the units of said model control system (RNM, AVM, RDM) having transfer functions identical to those of the homologous units of said process control system (RN, AV, RD), respectively.

7. Device according to claim 4 wherein said magnitude to be controlled is a level to which a container (2) is filled with a fluid occupying the interior volumes of the container, said actuator (4) controlling the flowrate of the fluid through a control passage (6) at the inlet-outlet of the container and constituting a control flowrate,
• said control device further including a control flowrate sensor (CD) supplying a process control flowrate signal (SD) representing the value of said control flowrate,
• said process control system being made up of process units including a process level controller (RN) including:
• a process level comparator (RNA) receiving said process output signal (SN) and said process control set point signal (SCR) and supplying a process level error signal (SEN) representing the error between the process level signal and the process control set point signal, and
• a process level control circuit (RNC) including at least one proportional, integral, derivative and/or time-delay channel, this circuit receiving said process level error signal (SEN) and supplying a process overall flowrate set point signal (SCDG) representing an overall flowrate of said fluid at the inlet-outlet of said container required to limit said current and future errors,
• said process units of the process control system further including a process flowrate controller (RD) including:
• a process flowrate comparator (RDA) receiving said process control flowrate signal (SD) and a process control flowrate set point signal (SDR) formed from said process overall flowrate set point signal (SCDG), the comparator supplying a process flowrate error signal (SED) representing an error between the process control flowrate signal and the process control flowrate set point signal, and
• a process flowrate control circuit (RDC) including at least one proportional, integral, derivative and/or time-delay channel and receiving said process flowrate error signal (SED) and supplying in response thereto said process control signal (SCD),
• said model control system being made up of model units homologous to said process units of said process control system to receive, process and supply model signals homologous to said process signals received, processed and supplied by the respective process units, the model units including a model level controller (RNM) including:
• a model level comparator (RNAM) receiving firstly a model level signal (SNM) consisting of said model output signal and secondly said model control set point signal (SCRM) and supplying a model level error signal (SENM) representing the error between the model level signal and the model control set point signal, and
• a model level control circuit (RNCM) including at least one proportional, integral, derivative and/or time-delay channel, this circuit receiving said model level error signal (SENM) and supplying a model overall flowrate set point signal (SCDGM),
• said model units of the model control system further including a model flowrate controller (RDM) including:
• a model flowrate comparator (RDAM) receiving firstly a model control flowrate signal (SDM) supplied by said process model (PM) in response to said model control signal (SCDM) so that said response constitutes a simulation of the action of said process control signal (SCD) on said process control flowrate signal (SD) in said process (P) and secondly a model control flowrate set point signal (SDRM) formed from said model overall flowrate set point signal (SCDGM), the comparator supplying a model flowrate error signal (SEDM) representing the error between the model control flowrate signal and the model control flowrate set point signal, and
• a model flowrate control circuit (RDCM) including at least one proportional, integral, derivative and/or time-delay channel, this circuit receiving said model flowrate error signal (SEDM) and supplying in response to it said model control signal (SCDM).

8. Device according to claim 7, said container (2) having a second fluid inlet-outlet passage (8) and a second flowrate sensor (CV) for supplying a second flowrate signal (-SV) representing a flowrate of said fluid through the second passage and constituting a second flowrate, the algebraic sum of said control flowrate and the second flowrate constituting a process overall flowrate,
• said control device being characterised in that said process model (PM) includes:
• a flowrate model (PEM) receiving said model control signal (SCDM) and processing it to simulate the action of said process control signal (SCD) on said process control flowrate signal via said actuator (4), said control flowrate and said control flowrate sensor (CD), the flowrate model supplying in response said model control flowrate signal (SDM),
• a model flowrate adder (PAM) adding algebraically said model control flowrate signal (SDM) and said second flowrate signal (-SV) to supply a model overall flowrate signal (SDGM), and
• a model flowrate integrator circuit (PFM) processing said model overall flowrate signal (SDGM) to simulate the action of said process overall flowrate on said process output signal (SN) via said filling level resulting from past values of the overall flowrate and said internal volumes of said container (2) and thereafter the response of said level sensor (CN) to this filling level to supply said process output signal, the model flowrate integrator circuit (PFM) supplying said model output signal (SNM) as a result of this processing.

9. Device according to claim 8 characterised in that said process control system (RN, AV, RD) further includes a process flowrate set point corrector (AV) receiving said process overall flowrate set point signal (SCDG) and algebraically subtracting therefrom said second flowrate signal (-SV) to supply said process control flowrate set point signal (SDR = SCDG + SV),
• said model control system (RNM, AVM, RDM) further including a model flowrate set point corrector (AVM) receiving said model overall flowrate set point signal (SCDGM) and algebraically subtracting therefrom said second flowrate signal (-SV) to supply said model control flowrate set point signal (SDRM = SCDGM + SV).

10. Device according to claim 9 characterised in that said container (2) is a steam generator in a nuclear power plant boiler, said magnitude to be controlled is a generator feed water level, said control flowrate is a feed water flowrate into the generator and said second flowrate is a flowrate of steam extracted from the generator and fed to a steam user external to said power plant boiler.
